# EUROPEAN PATENT APPLICATION

(11) **EP 4 647 636 A1**
(43) Date of publication of application: **12.11.2025**
(21) Application number: 25154311.2
(22) Date of filing: 28.01.2025
(51) Int. Cl.: F16K 15/02, F16K 31/08

(54) **CHECK VALVE**

(30) Priority: 06.05.2024 IT 202400010108
(71) Applicant: YGROS S.R.L, 36010 Zanè, Vicenza (IT)
(72) Inventor: CAROLLO, Martino, 36010 Zanè, Vicenza (IT)
(74) Representative: Mitola, Marco

(57) **Abstract**

A check valve (4) comprising a valve body (8) which delimits an outflow chamber (12) which extends from an inlet (16) to an outlet (20) of the valve (4), a shutter (24), housed in said outflow chamber (12), movable along an actuation stroke between an opening position and a closing position, wherein the shutter (24) comprises at least one portion made of ferromagnetic material, wherein the valve (4) comprises magnetic field generating means (40), said means (40) being arranged on the valve body (8), outside said outflow chamber (12), so as to generate a magnetic field which affects the at least one ferromagnetic material portion of the shutter (24). The shutter (4) comprises a closing portion configured to occlude said inlet (16) selectively when it is in the closing position, and at least one rear fin (44) adapted to split the flow of fluid crossing the inlet (16) into a plurality of flows and make a guide and rear centering for the shutter (24) with respect to the valve body (8). The shutter (24) comprises at least one front fin (48), opposite to the at least one rear fin (44) with respect to the closing portion (28), wherein said at least one front fin (48) is configured to make a guide and front centering for the shutter (24), wherein said at least one front fin (48) is made at least partially of ferromagnetic material so as to be affected by said magnetic field generating means (40).

## Description

### FIELD OF APPLICATION

The present invention relates to a check valve, and in particular, to a check valve for food-grade, chemical, biological, and/or pharmaceutical applications.

In particular, it is known in the art to make check valves for use in pipes to prevent backflow with respect to a predetermined outflow direction. Such check valves comprise at least one shutter element movable from a closing position to an opening position, which is in direct contact with the process fluid.

In many applications, the process fluids or liquids are particularly delicate from a chemical and biological point of view, such as in the case of food-grade liquids, which are highly susceptible to the formation of bacteria or microorganisms caused by liquid stagnation or the formation of foams or emulsions.

In other cases, the liquids used are particularly chemically aggressive and can lead to corrosion of the shutter element itself.

Therefore, shutter solutions made of food-grade and anti-corrosive materials are known in the art; said known shutters are often actuated by spring means. The presence of spring means increases the valve energy consumption as well as the load losses.

Indeed, the springs increase the resistance or elastic return force as their compression increases; this means that the force opposing the opening of the valve is minimum during opening and increases linearly as the degree of valve opening increases. Obviously, during normal operation, the valve is in the opening configuration for most of the time, whereby the consumption of liquid by the delivery pumps is increased.

Moreover, the spring means directly hit by the fluid create turbulence and contribute to the creation of emulsions and foams in the treated fluid. Moreover, the spring means show failures due to fatigue and/or corrosion. Possible breakage could cause extensive damage to components mounted in series with the valve when spring fragments break off and enter the circulation being carried by the flow.

Finally, the springs tend to make the shutter flicker during transitions and/or changes in fluid pressure.

Shutter solutions made of ferromagnetic materials are also known, so as to be operable by magnetic fields, so as to limit the energy consumption of the valves. However, such ferromagnetic materials are not always compatible for use with some fluids, in particular food-grade fluids.

Moreover, said solutions using shutters with ferromagnetic materials cannot ensure precise control of the closing force throughout the entire opening stroke of the shutter itself.

Indeed, the magnetic means which generate the magnetic field lines have a fixed position with respect to the shutter, and therefore the latter is subjected to a variable bias force along the stroke.

Multiple magnetic means arranged mutually in series can be used to overcome such a drawback; however, such a solution can be disadvantageous because the magnetic fields generated by the magnetic means in series can easily interfere with one another.

Moreover, during the opening stroke as seen, the shutter is subjected to the thrust action of the fluid which must flow out. Moreover, the shutters are also subjected to asymmetrical thrust actions which, in solutions with magnetic means in which springs are not provided, tend to rotate and possibly jam the shutter itself. Therefore, known solutions with magnetic means are not entirely free from jamming.

### PRESENTATION OF THE INVENTION

It is the object of the present invention to provide a check valve which solves the drawbacks mentioned with reference to the prior art.

Such drawbacks and limitations are solved by a check valve according to claim 1.

Other embodiments of the valve according to the invention are described in the following claims.

### DESCRIPTION OF THE DRAWINGS

Further features and advantages of the present invention will be more comprehensible from the following description of preferred embodiments thereof, given by way of non-limiting examples, wherein:

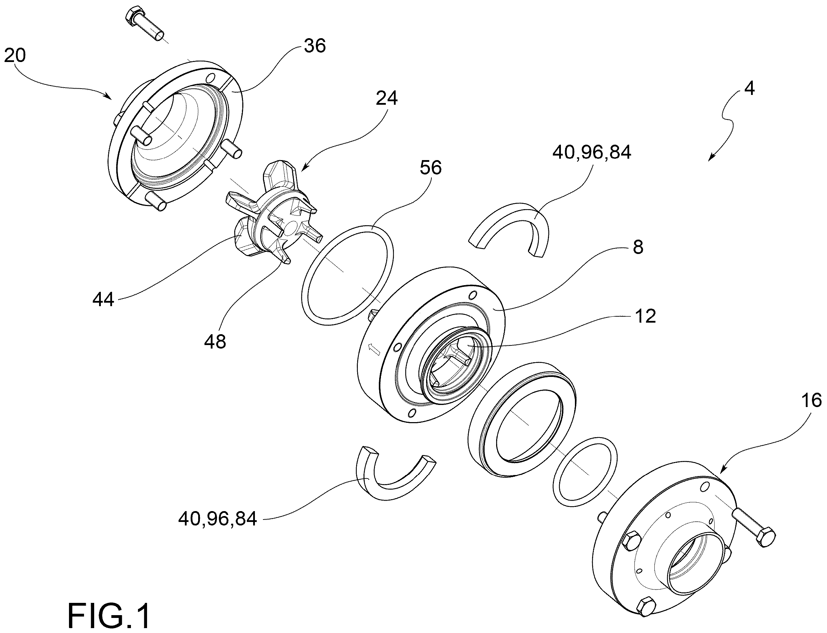

figure 1 depicts a perspective view with separate parts of a check valve according to an embodiment of the present invention;

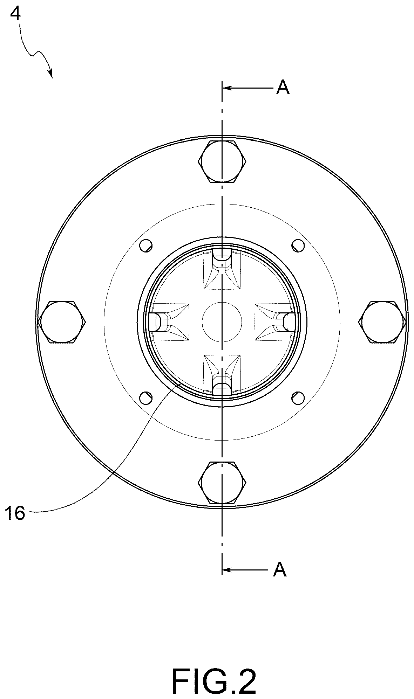

figure 2 depicts a front view, in assembled configuration, of the check valve in figure 1;
figure 3 depicts a section view of the check valve in figure 1, taken along section plane A-A shown in figure 2, in a closing configuration;
figure 4 depicts a section view of the check valve in figure 1, taken along section plane A-A shown in figure 2, in a partial opening configuration;
figure 5 depicts a section view of the check valve in figure 1, taken along section plane A-A shown in figure 2, in a full opening configuration;

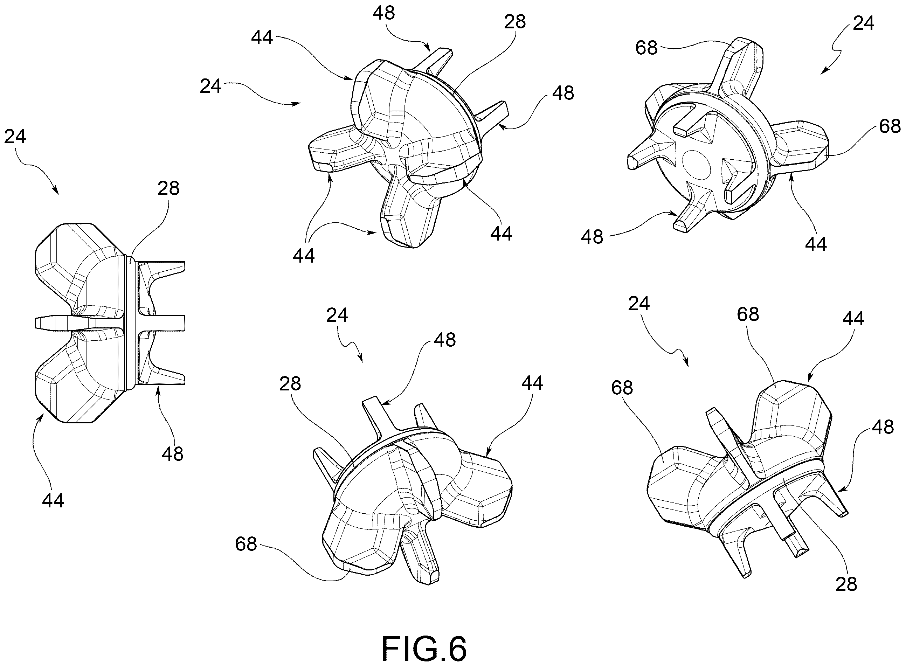

figure 6 depicts various views, from different angles, of the shutter of the valve in figure 1;

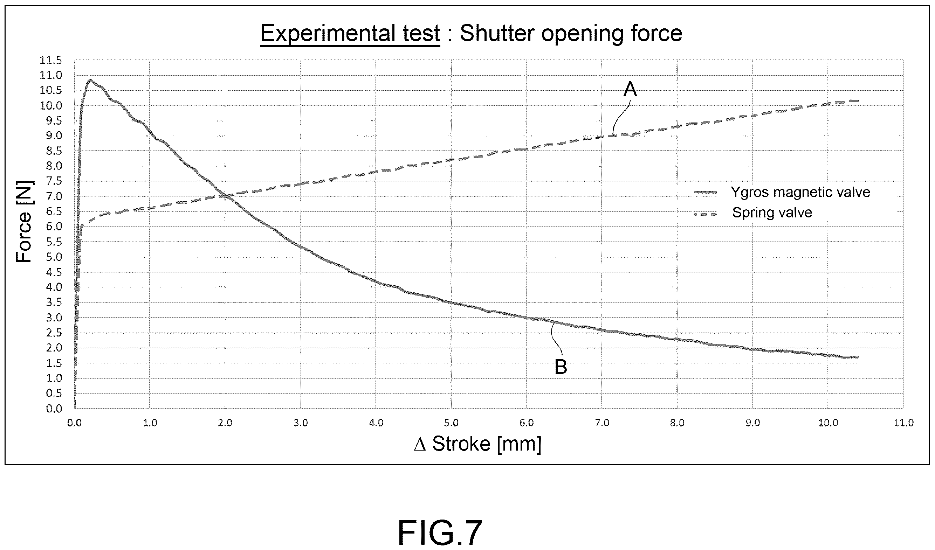

figure 7 depicts a chart of the trend of the opening force of a shutter of a check valve according to the present invention (line B) and of a coil spring check valve of the prior art (line A), as a function of the opening stroke of the shutter.

The elements or parts of elements common to the embodiments described below will be indicated using the same reference numerals.

### DETAILED DESCRIPTION

With reference to the aforesaid figures, reference numeral 4 indicates, as a whole, a check valve adapted to adjust the outflow a fluid.

The check valve 4 comprises a valve body 8 which delimit an outflow chamber 12 which extends from an inlet 16 to an outlet 20 of the valve 4. According to an embodiment, the valve body 8 is substantially cylindrical with respect to an extension axis X-X.

A check valve 4 comprises a shutter 24, housed in said outflow chamber 12, adapted to occlude the inlet 16 of the valve at a closing portion 28 facing said inlet 16.

The shutter 24 is movable along an actuation stroke between an opening position and a closing position. In particular, the actuation stroke is straight and parallel to said extension axis X-X.

At said outlet 20, a bottom 36 is associated with the valve body 8, adapted to allow the insertion and subsequent locking of the shutter 24 into the outflow chamber 12.

Advantageously, the shutter 24 comprises at least one portion made of ferromagnetic material. In the description, ferromagnetic material also means a permanent magnet.

For example, said shutter 24 is entirely made of a ferromagnetic stainless steel, such as duplex steel, superduplex steel, etc.

Advantageously, the valve 4 comprises magnetic field generating means 40 arranged on the valve body 8 outside the outflow chamber 12 so as to generate a magnetic field which affects the at least one ferromagnetic material portion of the shutter 24 and not to be hit by the flow of fluid which crosses the outflow chamber 12.

The shutter 24 comprises said closing portion 28 configured to selectively occlude the inlet 16 when it is in the closing position, and at least one rear fin 44 adapted to split the flow of fluid crossing the inlet 16 into a plurality of flows and make a guide and rear centering for the shutter 24 with respect to the valve body 8. Guide and rear centering mean that the shutter 24 is guided so as to translate parallel to the extension axis X-X during its actuation stroke from the outlet side 20.

Advantageously, the shutter 24 comprises at least one front fin 48, opposite to the at least one rear fin 44 with respect to the closing portion 28.

In particular, the front fins 48 and the rear fins 44 are arranged axially cantilevered along the extension axis X-X with respect to the closing portion 28, as well as from axially opposite sides with respect to said closing portion 28.

Advantageously, said at least one front fin 48 is configured to make a guide and front centering for the shutter 24.

Guide and front centering mean that the shutter 24 is guided so as to translate parallel to the extension axis X-X during its actuation stroke from the inlet side 16.

Therefore, it is apparent that the front fins 48 and the rear fins 44 cooperate synergistically with one another to guide the axial stroke movement of the shutter 24.

Advantageously, said at least one front fin 48 is at least partially made of ferromagnetic material so as to be affected by said magnetic field generating means 40.

According to a possible embodiment, the closing portion 28 and said at least one front fin 48 are made of ferromagnetic material.

According to a possible embodiment, said at least one front fin 48 is counter-shaped with respect to a front side wall 52 which delimits said inlet 16 at the front. The front side wall 52 is simply the inner side wall which delimits the inlet and is lapped by the fluid entering the valve body 8.

For example, said closing portion 28 of the shutter 24 is provided with at least one closing gasket 56 configured to fluid-tightly abut against a front shoulder 60 of the valve body 8 on the side of said inlet 16.

According to a possible embodiment, said at least one rear fin 44 is counter-shaped with respect to a rear side wall 64 which delimits said outlet 20 at the rear. The rear side wall 64 is simply the inner side wall which delimits the outlet 20 and is lapped by the fluid exiting the valve body 8.

According to a possible embodiment, said at least one rear fin 44 is provided with at least one flare 68 shaped to make a limit stop against a rear shoulder 72 of the valve body 8, on the side of said outlet 20.

For example, the shutter 24 consists of a front body 76, provided with said at least one front fin 48, and a rear body 78, provided with said at least one rear fin 44, said front body 76 and rear body 78 being hollow and connected to each other by a fluid-tight shape coupling comprising at least one sealing gasket 80.

Preferably, the shutter 24 comprises a plurality of front fins 48 arranged angularly in pitch and a plurality of rear fins 44 arranged angularly in pitch.

Preferably, the front fins 48 and rear fins 44 are four in number. Indeed, it has been determined that the best compromise in terms of guidance of shutter 24 and increased fluid passage is achieved with four fins.

Preferably, the same number of front fins 48 and rear fins 44 is provided; even more preferably, the front fins 48 and the rear fins 44 are angularly aligned with one another. This prevents the occurrence of possible turbulence in the fluid flow.

The magnetic field generating means 40 are arranged coaxially to the valve body 8 at said inlet 16; for example, said magnetic field generating means 40 comprise a toroidal magnet 84 arranged coaxially to the valve body 8 at an annular seat 88 of the valve body 8 opposite to said outflow chamber 12.

The valve body 8 comprises sealing means 92 adapted to lock the magnetic field generating means 40 in place and prevent contact of the magnetic field generating means 40 with the external environment of the check valve.

For example, said magnetic field generating means comprise a toroidal magnet 84 which can be made in one piece or can be made in at least two halves or half-rings 96 arranged coaxially with respect to the valve body 8.

According to a possible embodiment, the shutter 24 is counter-shaped with respect to the inner walls of the outflow chamber 12 to identify a meatus having a constant passage section with said chamber.

The liquid outflow rate thus remains as constant as possible and the formation of foams and/or emulsions is avoided.

The operation of a check valve according to the invention will now be described.

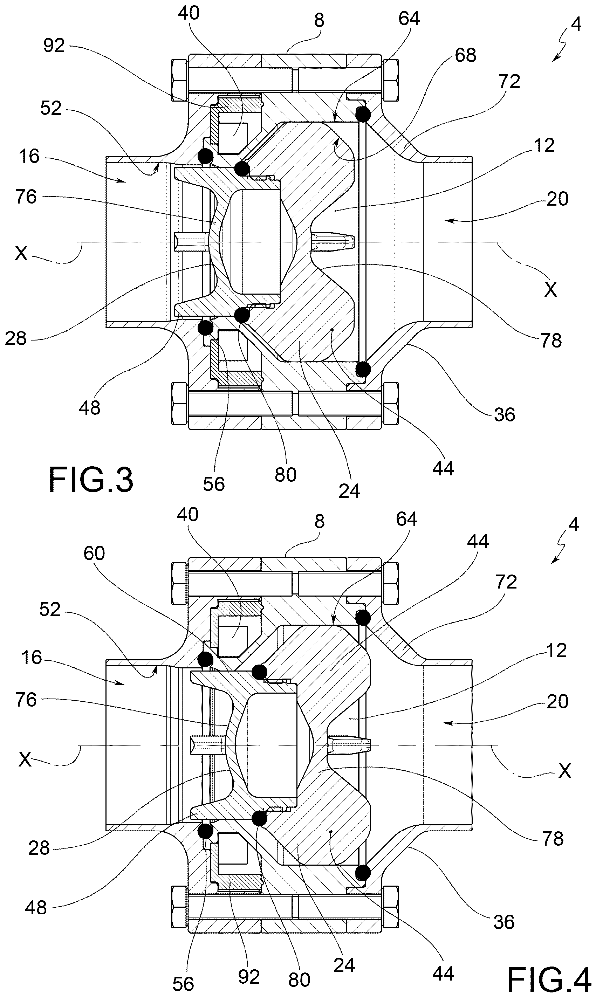

In particular, the magnetic field generating means 40 apply an attractive force to the shutter 24 so as to bring it into a closing configuration (figure 3).

When the force applied by the incoming fluid in the valve body 8 on the closing portion 28 of the shutter 24 exceeds the magnetic attraction force and the pull-back force of the shutter due to the pressure of the outgoing fluid, the shutter 24 begins to open and allows the passage of fluid (figure 4).

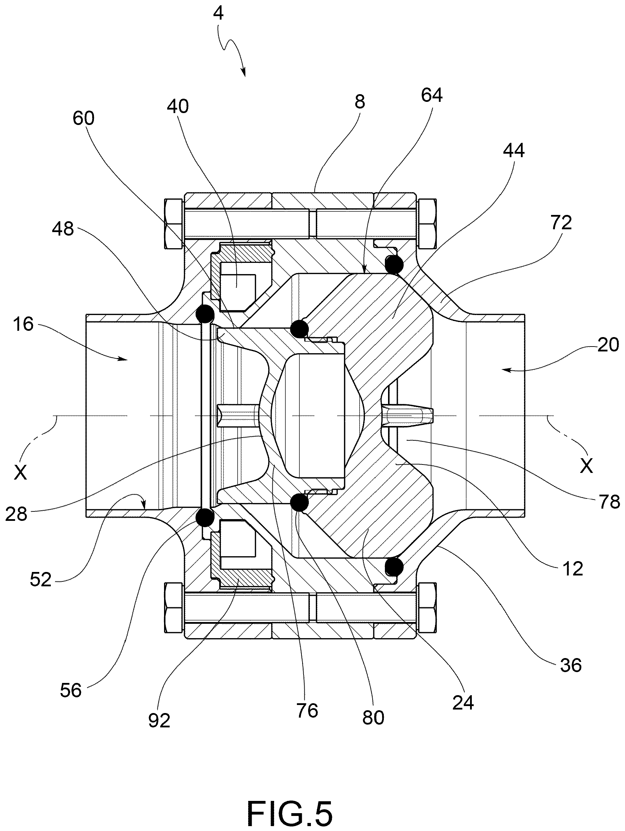

Advantageously, as a result of the shutter 24 moving away from the closing position, the magnetic attraction force acting thereon decreases and thus, with the same inlet fluid pressure, the opening effect of shutter 24 automatically tends to be amplified until the shutter is taken into the fully open condition (figure 5) in which the shutter abut against the rear shoulder 72.

The fluid is then free to pass into the valve body 8 through a preferably constant cross section which, by limiting changes in fluid speed, contributes to obtaining a laminar flow, free of turbulence and consequent formation of foams and emulsions.

As can be appreciated from the description above, the check valve according to the invention allows overcoming the drawbacks of the prior art.

In particular, the valve has limited energy consumption by virtue of its low actuation energy as well as of the low pressure drop between inlet and outlet.

The check valve allows very smooth fluid passage with small load losses and thus with a minimum pressure drop between the valve inlet and outlet.

The valve components have very low roughness, which limits the fluid turbulence and the resulting load losses as well as the formation of foams and emulsions.

The valve is capable of achieving a laminar flow which further limits the formation of foams and emulsions.

The shutter of the check valve is not subject to flickering as in the case of known spring solutions.

The valve according to the present invention has high resistance to mechanical and chemical corrosion by virtue of the low turbulence and the possibility of using stainless steels which are resistant to chemical and mechanical attacks as well as compatible with applications on food-grade, chemical, and biological fluids.

Advantageously, the magnet is placed outside the valve body so that it does not come in contact with the liquid crossing the valve. The magnet is thus not subject to any type of mechanical and/or chemical corrosion.

Advantageously, the magnet is protected, in turn, from external corrosive agents by means of a chemical surface treatment and by using a gasket.

Advantageously, the magnet applies a maximum attraction force to the shutter in a valve-closing configuration. In other words, in the closing configuration, the attraction force between the shutter and the magnet is maximum because the distance between the two components is minimum; on the other hand, when the valve is open, the attraction force between the magnet and the shutter is minimum because the distance between the same components is maximum.

This operation is opposite to that of traditional spring check valves in which the spring force is minimum when closing and maximum when opening, thus increasing the energy consumption of the valve which works in the opening configuration for most of the time.

Moreover, unlike other magnetic solutions of the prior art, by virtue of the presence of the front guides, the attraction force on the shutter is precisely controlled without requiring the use of multiple magnets mutually in series. Moreover, the combined action of the front guides and rear guides allows precise control of the position of the shutter, which can slide without tending to rotate and/or jam in the valve body.

Advantageously, the shutter, during its actuation stroke, is guided both from the front side, by means of the front fins, and from the rear side, by means of the rear fins; the axial movement of the shutter is thus particularly precise and the shutter is not subject to jamming.

Moreover, by virtue of the front fins, it is possible to increase the actuation stroke of the shutter because, as seen, these front fins are not only an axial guide but also a thrust element because they are subjected to the action of the magnetic field generating means. In other words, despite the increased opening stroke, the front fins are still subjected to the effective thrust action of the magnetic field generating means. If the actuation stroke of the shutter is increased, more fluid flow is achieved and thus energy savings on pump consumption are achieved.

Those skilled in the art may make several changes and variations to the check valves described above in order to meet contingent, specific needs.

The scope of protection of the present invention is defined by the following claims.

### Reference elements

4: check valve
8: valve body
12: outflow chamber
16: inlet
20: outlet
24: shutter
28 closing portion
36: bottom
40: magnetic field generating means
44: rear fin
48: front fin
52: front side wall
56: closing gasket
60: front shoulder
64: rear side wall
68: flare
72: rear shoulder
76: front body
78: rear body
80: sealing gasket
84: toroidal magnet
88: annular seat
92: sealing means
96: half-rings
X-X: extension axis

## Claims

1. A check valve (4), adapted to adjust the outflow of a fluid, comprising
- a valve body (8) delimiting an outflow chamber (12) which extends from an inlet (16) to an outlet (20) of the valve (4),
- a shutter (24), housed in said outflow chamber (12), movable along an actuation stroke between an opening position and a closing position,
- wherein the shutter (24) comprises at least one portion made of ferromagnetic material,
- wherein the valve (4) comprises magnetic field generating means (40), said means (40) being arranged on the valve body (8), outside said outflow chamber (12), so as to generate a magnetic field which affects the at least one ferromagnetic material portion of the shutter (24) and not to be hit by the flow of fluid which crosses the outflow chamber (12),
- wherein the shutter (4) comprises a closing portion configured to occlude said inlet (16) selectively when it is in the closing position, and at least one rear fin (44) adapted to split the flow of fluid crossing the inlet (16) into a plurality of flows and make a guide and rear centering for the shutter (24) with respect to the valve body (8),
- wherein the shutter (24) comprises at least one front fin (48), opposite to the at least one rear fin (44) with respect to the closing portion (28),
- wherein said at least one front fin (48) is configured to make a guide and front centering for the shutter (24),
- wherein said at least one front fin (48) is made at least partially of ferromagnetic material so as to be affected by said magnetic field generating means (40).

2. A check valve (4) according to claim 1, wherein the closing portion (28) and said at least one front fin (48) are made of ferromagnetic material.

3. A check valve (4) according to claim 1 or 2, wherein said at least one front fin (48) is counter-shaped with respect to a front side wall (52) which delimits said inlet (16) at the front.

4. A check valve (4) according to claim 1, 2 or 3, wherein said closing portion (28) is provided with at least one closing gasket (56) configured to fluid-tightly abut against a front shoulder (60) of the valve body (8) on the side of said inlet (16).

5. A check valve (4) according to claim 1, 2, 3, or 4, wherein said at least one rear fin (44) is counter-shaped with respect to a rear side wall (64) which delimits said outlet (20) at the rear.

6. A check valve (4) according to any one of claims 1 to 5, wherein said at least one rear fin (64) is provided with at least one flare (68) shaped to make a limit stop against a rear shoulder (72) of the valve body (8), on the side of said outlet (20).

7. A check valve (4) according to any one of claims 1 to 6, wherein the shutter (24) consists of a front body (76), provided with said at least one front fin (48), and a rear body (78), provided with said at least one rear fin (44), said front body (76) and rear body (78) being hollow and connected to each other by a fluid-tight shape coupling, comprising at least one sealing gasket (80).

8. A check valve (4) according to any one of claims 1 to 7, wherein the shutter (24) comprises a plurality of front fins (48) arranged angularly in pitch and a plurality of rear fins (44) arranged angularly in pitch.

9. A check valve (4) according to claim 8, wherein the front fins (48) and the rear fins (44) are four in number.

10. A check valve (4) according to any one of claims 8 to 9, wherein the same number of front fins (48) and rear fins (44) is provided and wherein said front fins (48) and said rear fins (44) are angularly aligned with one another.

11. A check valve (4) according to any one of claims 1 to 10, wherein said magnetic field generating means (40) are arranged coaxially to the valve body (8) at said inlet (16) and wherein said magnetic field generating means (40) comprise a toroidal magnet (84) arranged coaxially to the valve body (8) at an annular seat (88) of the valve body (8) opposite to said outflow chamber (12).

12. A check valve (4) according to any one of claims 1 to 11, wherein the valve body (8) comprises sealing means (92) adapted to lock the magnetic field generating means (40) in place and prevent the contact of the magnetic field generating means (40) with the external environment of the check valve (4).

13. A check valve (4) according to any one of claims 1 to 12, wherein said magnetic field generating means (40) comprise a toroidal magnet (84).

14. A check valve (4) according to claim 13, wherein said toroidal magnet (84) is made in one piece arranged coaxially with respect to the valve body (8).

15. A check valve (4) according to claim 13, wherein said toroidal magnet (84) is made in two halves or half-rings (96) arranged coaxially with respect to the valve body (8).
